(19)

**Europäisches Patentamt**
**European Patent Office**
**Office européen des brevets**

(11) **EP 4 539 146 A1**

(12) **EUROPEAN PATENT APPLICATION**
published in accordance with Art. 153(4) EPC

(43) Date of publication:
**16.04.2025 Bulletin 2025/16**

(21) Application number: **23912682.4**

(22) Date of filing: **13.12.2023**

(51) International Patent Classification (IPC):
*H01M 4/134* (2010.01)    *H01M 4/38* (2006.01)
*H01M 4/48* (2010.01)    *H01M 10/0525* (2010.01)
*H01M 4/04* (2006.01)    *H01M 4/02* (2006.01)

(52) Cooperative Patent Classification (CPC):
**H01M 4/02; H01M 4/04; H01M 4/134; H01M 4/38;**
**H01M 4/48; H01M 10/0525;** Y02E 60/10

(86) International application number:
**PCT/KR2023/020506**

(87) International publication number:
**WO 2024/144007 (04.07.2024 Gazette 2024/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **26.12.2022  KR 20220184859**

(71) Applicant: **LG Energy Solution, Ltd.**
**Seoul 07335 (KR)**

(72) Inventors:
• **JUN, Chan Soo**
**Daejeon 34122 (KR)**
• **KWON, Yohan**
**Daejeon 34122 (KR)**
• **KIM, Young Jae**
**Daejeon 34122 (KR)**
• **LEE, Jaewook**
**Daejeon 34122 (KR)**

(74) Representative: **Hoffmann Eitle**
**Patent- und Rechtsanwälte PartmbB**
**Arabellastraße 30**
**81925 München (DE)**

(54) **NEGATIVE ELECTRODE FOR LITHIUM SECONDARY BATTERY, METHOD FOR MANUFACTURING NEGATIVE ELECTRODE FOR LITHIUM SECONDARY BATTERY, AND LITHIUM SECONDARY BATTERY COMPRISING NEGATIVE ELECTRODE**

(57)    The present application relates to a negative electrode for a lithium secondary battery, a method for manufacturing a negative electrode for a lithium secondary battery, and a lithium secondary battery including a negative electrode.

[Figure 1]

EP 4 539 146 A1

**Description**

[Technical Field]

The present application claims priority to and the benefit of Korean Patent Application No. 10-2022-0184859 filed in the Korean Intellectual Property Office on December 26, 2022, the entire contents of which are incorporated herein by reference.

Accordingly, the present application relates to a negative electrode for a lithium secondary battery, a method for manufacturing a negative electrode for a lithium secondary battery, and a lithium secondary battery including a negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions to and from the positive electrode, and silicon-based particles having a high discharge capacity may be used as the negative electrode active material.

In particular, in response to the demand for high-density energy batteries in recent years, researches are being actively conducted on a method for increasing a capacity by using a silicon-based compound such as Si/C or SiOx having a capacity 10-fold or higher than that of a graphite-based material, in combination as a negative electrode active material. When compared with graphite that is typically used, however, the silicon-based compound that is a high-capacity material is excellent in capacity characteristic itself, but undergoes rapid volume expansion during a charging process to disconnect a conductive path, resulting in deterioration in battery characteristics, and accordingly, the capacity decreases from the initial stage. In addition, for a silicon-based negative electrode, when the charging and discharging cycle is repeated, lithium ions are not uniformly charged in the depth direction of the negative electrode and reactions proceed on the surface, so that degradation in surface is accelerated, and therefore, the performance needs to be improved in terms of battery cycle.

Therefore, in order to solve the problem that occurs when a silicon-based compound is used as a negative electrode active material, a variety of methods are discussed, such as a method of controlling a drive potential, a method of additionally coating a thin film on an active material layer, a method of suppressing volume expansion itself such as a method of controlling a particle diameter of a silicon-based compound or a development of a binder capable of suppressing volume expansion of a silicon-based compound to prevent disconnection of a conductive path. In addition, research is being conducted to supplement the life characteristics of the silicon-based negative electrode by limiting a proportion of the silicon-based active material used during initial charging and discharging by a method of pre-lithiating the silicon-based active material layer, and imparting a reservoir role.

However, since the above methods may make the performance of the battery rather deteriorate, there is a limitation in application, so that there is still a limitation in commercialization of manufacturing a negative electrode battery having a high content of a silicon-based compound. In addition, as the proportion of the silicon-based active material included in the silicon-based active material layer increases, pre-lithiation is concentrated on the surface of the negative electrode, so that the silicon-based active material on the surface is rather damaged, and as non-uniform pre-lithiation occurs, a problem with the improvement of life characteristics occurs.

Accordingly, research is also underway on a method of using a silicon-based active material and additionally using a negative electrode active material layer that serves as a buffer layer. However, it is very difficult in terms of process to put any layer of a thinner film on top of the silicon-based active material layer formed thin for rapid charging, making it difficult to perform production through actual processes and products.

Therefore, there is a need for research on a method in which even when a silicon-based compound is used as an active material in order to improve capacity characteristics, a decrease in capacity characteristics is not caused, and cycle performance can be improved by preventing deterioration in the electrode surface during charging and discharging cycles, and even when a double active material layer is used, a more uniform and thinner coating can be formed.

Prior Art Document

(Patent Literature 1) Japanese Patent Application Publication No. 2009-080971

[Detailed Description of the Invention]

[Technical Problem]

The present application relates to a negative electrode for a lithium secondary battery, a method for manufacturing a negative electrode for a lithium secondary battery, and a lithium secondary battery including a negative electrode, capable of while using the silicon-based active material for a negative electrode, maximizing capacity characteristics, which is a main purpose of using a silicon-based active material, preventing deterioration in electrode surface during charging and discharging cycles, which is a problem in the related art, and furthermore, enabling a uniform two-layered negative electrode active material layer and a thin film coating for ensuring rapid charging performance and processability.

[Technical Solution]

An exemplary embodiment of the present specification provides a negative electrode for a lithium secondary battery, the negative electrode including: a negative electrode current collector layer; a first negative electrode active material layer provided on one surface or both surfaces of the negative electrode current collector layer; and a second negative electrode active material layer provided on a surface of the first negative electrode active material layer opposite to a surface facing the negative electrode current collector layer, wherein the first negative electrode active material layer includes a first negative electrode active material layer composition including a first negative electrode active material, and the second negative electrode active material layer includes a second negative electrode active material layer composition including a second negative electrode active material, wherein the first negative electrode active material includes one or more selected from the group consisting of SiOx (x=0) and SiOx (0<x<2), and includes SiOx (x=0) in an amount of 95 parts by weight or more on the basis of 100 parts by weight of the first negative electrode active material, wherein the second negative electrode active material includes a mixture of one or more selected from the group consisting of a carbon-based active material, a silicon-based active material, a metal-based active material capable of alloying with lithium, and a lithium-containing nitride, wherein the second negative electrode active material layer has a first surface of the second negative electrode active material layer opposite to a surface facing the first negative electrode active material layer and a second surface of the second negative electrode active material layer facing the first negative electrode active material layer, wherein the first surface and the second surface include a non-uniform surface, respectively, and wherein the second negative electrode active material layer satisfies a non-uniformity expressed by Formula 1 below:

$$[\text{Formula 1}]$$

$$0\ \mu\text{m} \leq \left| C-(A+B/2) \right| \leq 10\ \mu\text{m}$$

in Formula 1 above,

A refers to a longest distance ($\mu$m) between the first surface and the second surface,
B refers to a shortest distance ($\mu$m) between the first surface and the second surface, and
C refers to an average thickness ($\mu$m) of the second negative electrode active material layer.

Another exemplary embodiment provides a method for manufacturing a negative electrode for a lithium secondary battery, the method including: preparing a negative electrode current collector layer; forming a first negative electrode active material layer by applying a first negative electrode active material layer composition to one surface or both surfaces of the negative electrode current collector layer through a coater; and forming a second negative electrode active material layer by applying a second negative electrode active material layer composition to a surface of the first negative electrode active material layer opposite to a surface in contact with the negative electrode current collector layer through the coater, wherein the first negative electrode active material includes one or more selected from the group consisting of SiOx (x=0) and SiOx (0<x<2), and includes SiOx (x=0) in an amount of 95 parts by weight or more on the basis of 100 parts by weight of the first negative electrode active material, wherein the second negative electrode active material includes a mixture of one or more selected from the group consisting of a carbon-based active material, a silicon-based active material, a metal-based active material capable of alloying with lithium, and a lithium-containing nitride, wherein in the step of forming the first negative electrode active material layer by applying the first negative electrode active material layer composition, a liquid thickness of a coater is 50 μm or greater and 100 μm or less, and wherein in the step of forming the second negative electrode active material layer by applying the second negative electrode active material layer composition to the surface of the first negative electrode active material layer opposite to the surface in contact with the negative electrode current collector layer, a liquid thickness of the coater is 10 μm or greater and 60 μm or less.

Finally, there is provided a lithium secondary battery including a positive electrode; the negative electrode for a lithium secondary battery according to the present application; a separator provided between the positive electrode and the negative electrode; and an electrolyte.

[Advantageous Effects]

The negative electrode for a lithium secondary battery according to an exemplary embodiment of the present invention has a double-layered active material layer composed of the first negative electrode active material layer and the second negative electrode active material layer. In particular, the first negative electrode active material included in the first negative electrode active material layer includes one or more selected from the group consisting of SiOx (x=0) and SiOx (0<x<2), and includes SiOx (x=0) in an amount of 95 parts by weight or more on the basis of 100 parts by weight of the first negative electrode active material, and the second negative electrode active material included in the second negative electrode active material layer includes a mixture of one or more selected from the group consisting of a carbon-based active material, a silicon-based active material, a metal-based active material capable of alloying with lithium, and a lithium-containing nitride.

The negative electrode for a lithium secondary battery according to the present application includes a double-layer active material layer having a specific composition and content as described above. In particular, the first negative electrode active material layer includes a high content of SiOx (x=0), so that the advantages of high capacity, high density, and rapid charging can be retained as they are. Furthermore, silicon-based and/or carbon-based active materials, and the like are included in the second negative electrode active material layer, so that degradation in the electrode surface can be prevented during charging and discharging cycles, and uniformity can also be improved during pre-lithiation.

Above all, in the negative electrode for a lithium secondary battery according to the present application, the second negative electrode active material layer satisfies the non-uniformity of Formula 1 above. In other words, the first negative electrode active material layer has a silicon-based negative electrode and is coated within a thin thickness range. In this case, there was a problem in forming the second negative electrode active material layer as a thin film on top of the silicon-based negative electrode. However, when performing coating by the method as in the present application (by controlling a liquid thickness and a core thickness of the coater), the non-uniformity of Formula 1 above is satisfied, and the second negative electrode active material layer can be coated more uniformly and thinly on top of the first negative electrode active material layer.

Accordingly, a lithium secondary battery including the negative electrode satisfies optimal capacity characteristics, which are the advantage of a Si negative electrode, and at the same time, satisfies cycle characteristics.

As such, the negative electrode for a lithium secondary battery according to the present application has the feature that the second negative electrode active material layer is coated more uniformly and thinly as a thin film on top of the first negative electrode active material layer to configure a double-layer in order to address a problem of degradation in surface, a problem of uniformity during pre-lithiation and a problem of life characteristics, which problems are disadvantages when a high content of Si particles is applied to an electrode, while taking an advantage of an electrode to which the high content of Si particles is applied as a single-layer active material.

[Brief Description of Drawings]

FIG. 1 is a view showing a stack structure of a negative electrode for a lithium secondary battery according to an exemplary embodiment of the present application.
FIG. 2 is a view showing a stack structure of a negative electrode for a lithium secondary battery according to an exemplary embodiment of the present application.
FIG. 3 is a view showing a SEM photograph of a negative electrode for a lithium secondary battery according to an exemplary embodiment of the present application.
FIG. 4 is a flowchart showing a wet on dry process according to an exemplary embodiment of the present application.
FIG. 5 is a flowchart showing a wet on wet process according to an exemplary embodiment of the present application.

<Explanation of Reference Numerals and Symbols>

10: second negative electrode active material layer
20: first negative electrode active material layer
30: negative electrode current collector layer
100: negative electrode for lithium secondary battery

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.

In the present specification, "Dn" refers to a particle diameter distribution, and refers to a particle diameter at the n% point in the cumulative distribution of the number of particles according to the particle diameter. That is, D50 is a particle diameter (average particle diameter, center particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle diameter distribution may be measured using a laser diffraction method. Specifically, after powder to be measured is dispersed in a dispersion medium, the resultant dispersion is introduced into a commercially available laser diffraction particle diameter measurement apparatus (for example, Microtrac S3500) in which a difference in a diffraction pattern according to the particle size is measured, when a laser beam passes through particles, and then a particle diameter distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a negative electrode for a lithium secondary battery, the negative electrode including: a negative electrode current collector layer; a first negative electrode active material layer provided on one surface or both surfaces of the negative electrode current collector layer; and a second negative electrode active material layer provided on a surface of the first negative electrode active material layer opposite to a surface facing the negative electrode current collector layer, wherein the first negative electrode active material layer includes a first negative electrode active material layer composition including a first negative electrode active material, and the second negative electrode active material layer includes a second negative electrode active material layer composition including a second negative electrode active material, wherein the first negative electrode active material includes one or more selected from the group consisting of SiOx (x=0) and SiOx (0<x<2), and includes SiOx (x=0) in an amount of 95 parts by weight or more on the basis of 100 parts by weight of the first negative electrode active material, wherein the second negative electrode active material includes a mixture of one or more selected from the group consisting of a carbon-based active material, a silicon-based active material, a metal-based active material capable of alloying with lithium, and a lithium-containing nitride, wherein the second negative electrode active material layer has a first surface of the second negative electrode active material layer opposite to a surface facing the first negative electrode active material layer and a second surface of the second negative electrode active material layer facing the first negative electrode active material layer, wherein the first surface and the second surface include a non-uniform surface, respectively, and wherein the second negative electrode active material layer satisfies a non-uniformity expressed by Formula 1 below:

$$[\text{Formula 1}]$$

$$0\ \mu m \le \left| C-(A+B/2) \right| \le 10\ \mu m$$

in the Formula 1,

A refers to a longest distance ($\mu$m) between the first surface and the second surface,
B refers to a shortest distance ($\mu$m) between the first surface and the second surface, and
C refers to an average thickness ($\mu$m) of the second negative electrode active material layer.

In the negative electrode for a lithium secondary battery according to the present application, the second negative electrode active material layer satisfies the non-uniformity of Formula 1 above. In other words, the first negative electrode active material layer has a silicon-based negative electrode and is coated within a thin thickness range. In this case, there was a problem in forming the second negative electrode active material layer as a thin film on top of the silicon-based negative electrode. However, when performing coating by the method as in the present application (by controlling a liquid thickness and a core thickness of the coater), the non-uniformity of Formula 1 above is satisfied, and the second negative electrode active material layer can be coated more uniformly and thinly on top of the first negative electrode active material layer. In other words, the negative electrode for a lithium secondary battery according to the present application optimizes uniformities and thicknesses of the first negative electrode active material layer having a high capacity feature and the second negative electrode active material layer capable of controlling the problem of reaction non-uniformity in which a reaction is concentrated only on a surface of an electrode during charging and discharging of the first negative electrode active material layer and the problem of uniformity during pre-lithiation and having excellent durability. Accordingly, a lithium secondary battery including the negative electrode satisfies optimal capacity characteristics, which are the advantage of a Si negative electrode, and at the same time, satisfies life characteristics.

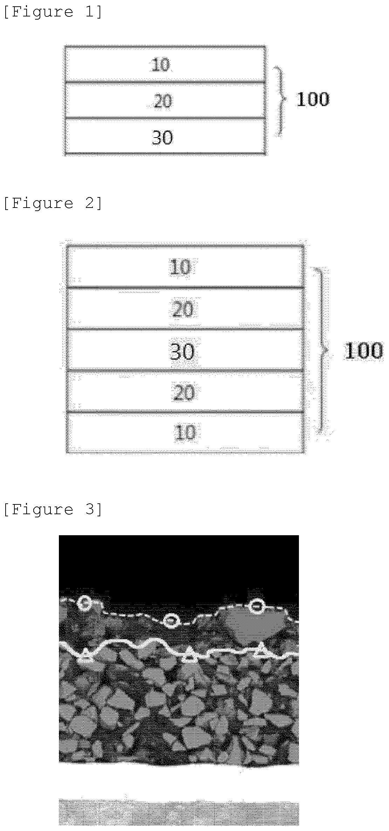

FIG. 1 is a view showing a stack structure of a negative electrode for a lithium secondary battery according to an exemplary embodiment of the present application. Specifically, a negative electrode 100 for a lithium secondary battery can be seen which includes a first negative electrode active material layer 20 and a second negative electrode active material layer 10 on one surface of a negative electrode current collector layer 30. FIG. 1 shows that the first negative electrode active material layer is formed on one surface, but the first negative electrode active material layer may be formed on both surfaces of the negative electrode current collector layer. As described above, in an exemplary embodiment of the present application, the first negative electrode active material layer may be formed on an entire surface of the negative electrode current collector layer, and the second negative electrode active material layer may be formed on an entire surface of the first negative electrode active material layer.

In addition, FIG. 2 is a view showing a stack structure of a negative electrode for a lithium secondary battery according to an exemplary embodiment of the present application. Specifically, as shown in FIG. 2, a first negative electrode active material layer 20 and a second negative electrode active material layer 10 may be formed on both surfaces of a negative electrode current collector layer 30. In addition, an arrangement of 10>20>30>20>10 is possible, and furthermore, when the first negative electrode active material layer and the second negative electrode active material layer are sequentially stacked on only one surface of the negative electrode current collector layer, such as 10>20>30>20, 10>20>30>10, 10>20>30>10>20, or the like, the negative electrode active material layers may be stacked in an arbitrary arrangement on the opposite surface. Preferably, both surfaces of the negative electrode current collector layer have the same composition, and specifically may have a structure of 10>20>30>20>10.

Below, the negative electrode for a lithium secondary battery of the present invention will be described in more detail.

In an exemplary embodiment of the present application, there is provided a negative electrode for a lithium secondary battery including: a negative electrode current collector layer; a first negative electrode active material layer provided on one surface or both surfaces of the negative electrode current collector layer; and a second negative electrode active material layer provided on a surface opposite to a surface of the first negative electrode active material layer in contact with the negative electrode current collector layer.

In an exemplary embodiment of the present application, the negative electrode current collector layer generally has a thickness of 1 $\mu$m to 100 $\mu$m. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present application, a thickness of the negative electrode current collector layer may be 1 $\mu$m or greater and 100 $\mu$m or less.

However, the thickness may be variously modified depending on a type and use of the negative electrode used, and is not limited thereto.

In an exemplary embodiment of the present application, the first negative electrode active material may include one or more selected from the group consisting of SiOx (x=0) and SiOx (0<x<2), and may include the SiOx (x=0) in an amount of 95 parts by weight or more on the basis of 100 parts by weight of the first negative electrode active material.

In an exemplary embodiment of the present application, the first negative electrode active material may include one or more selected from the group consisting of SiOx (x=0) and SiOx (0<x<2), and may include SiOx (x=0) in an amount of 95 parts by weight or more, preferably 97 parts by weight or more, and more preferably 99 parts by weight or more, and 100 parts by weight or less, on the basis of 100 parts by weight of the first negative electrode active material.

In an exemplary embodiment of the present application, pure silicon (Si) particles may be particularly used as the first negative electrode active material. The use of pure silicon (Si) as the first negative electrode active material may mean that, on the basis of total 100 parts by weight of the first negative electrode active material as described above, pure Si particles (SiOx (x=0)) not bound to other particles or elements are included within the above range.

In an exemplary embodiment of the present application, the first negative electrode active material may be composed of SiOx (x=0).

The first negative electrode active material layer according to the present application includes the first negative electrode active material, and specifically, includes pure silicon particles including 95 parts by weight or more of SiOx (x=0). When a high content of pure silicon particles is included, the capacity characteristics are excellent, but the life characteristics are degraded due to a non-uniform reaction on a surface. Accordingly, the second negative electrode active material layer according to the present invention is included at a specific weight loading amount, thereby solving the above-described problems.

Note that an average particle diameter (D50) of the first negative electrode active material of the present invention may be 3 $\mu$m to 10 $\mu$m, specifically 4 $\mu$m to 8 $\mu$m, and more specifically 5 $\mu$m to 7 $\mu$m. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the first negative electrode active material has a value equal to or greater than the lower limit value of the range, a contact area between the silicon particles and the conductive material is excellent due to the composite made of the conductive material and the binder in the negative electrode slurry, so that a possibility of sustaining the conductive network increases, thereby increasing the capacity retention rate. In the meantime, when the average particle diameter satisfies the above range, excessively large silicon particles are excluded, so that a surface of the negative electrode is formed smooth. Accordingly, a current density non-uniformity phenomenon during charging and discharging can be prevented.

In an exemplary embodiment of the present application, the first negative electrode active material generally has a characteristic BET specific surface area. The BET specific surface area of the first negative electrode active material is preferably 0.01 m2/g to 150.0 m2/g, more preferably 0.1 m2/g to 100.0 m2/g, particularly preferably 0.2 m2/g to 80.0 m2/g, and most preferably 0.2 m2/g to 18.0 m2/g. The BET specific surface area is measured in accordance with DIN 66131 (using nitrogen).

In an exemplary embodiment of the present application, the first negative electrode active material may be present, for example, in a crystalline or amorphous form, and is preferably not porous. The silicon particles are preferably spherical or splinter-shaped particles. Alternatively, but less preferably, the silicon particles may also have a fiber structure or may be present in the form of a silicon-containing film or coating.

In an exemplary embodiment of the present application, the first negative electrode active material may have a non-spherical shape and its sphericity (circularity) is, for example, 0.9 or less, for example, 0.7 to 0.9, for example 0.8 to 0.9, and for example 0.85 to 0.9.

In the present application, the sphericity is determined by Formula A-1, in which A is an area and P is a boundary line.

[Formula A-1]

$$4\pi A/P^2$$

In an exemplary embodiment of the present application, there is provided the negative electrode for a lithium secondary battery in which the first negative electrode active material is included in an amount of 60 parts by weight or more on the basis of 100 parts by weight of the first negative electrode active material layer composition.

In another exemplary embodiment, the first negative electrode active material may be included in an amount of 60 parts by weight or more, preferably 65 parts by weight or more, and more preferably 70 parts by weight or more, and 95 parts by weight or less, preferably 90 parts by weight or less, and more preferably 80 parts by weight or less on the basis of 100 parts by weight of the first negative electrode active material layer composition.

Although the first negative electrode active material layer composition according to the present application uses the first negative electrode active material with a significantly high capacity within the above range, a second negative electrode active material layer described below is also used, thereby solving the problems of surface degradation during charging and discharging, uniformity during pre-lithiation, and life characteristics without lowering the overall capacity performance of the negative electrode.

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery.

Accordingly, in an exemplary embodiment of the present application, the first negative electrode active material layer composition may further include one or more selected from the group consisting of a first negative electrode conductive material, and a first negative electrode binder.

In this case, as the first negative electrode conductive material and the first negative electrode binder included in the first negative electrode active material layer composition, those used in the art may be used without limitation.

In an exemplary embodiment of the present application, as the first negative electrode conductive material, materials that can be generally used in the art may be used without limitation, and specifically, one or more selected from the group consisting of a point-like conductive material, a planar conductive material; and a linear conductive material may be included.

In an exemplary embodiment of the present application, the point-like conductive material refers to a conductive material that may be used for improving conductivity of the negative electrode, has conductivity without causing a chemical change and has a point-like or spherical shape. Specifically, the point-like conductive material may be one or more species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 $m^2$/g or greater and 70 $m^2$/g or less, preferably 45 $m^2$/g or greater and 65 $m^2$/g or less, and more preferably 50 $m^2$/g or greater and 60 $m^2$/g or less.

In an exemplary embodiment of the present application, a particle diameter of the point-like conductive material may be 10 nm to 100 nm, preferably 20 nm to 90 nm, and more preferably 20 nm to 60 nm.

In an exemplary embodiment of the present application, the first negative electrode conductive material may include a planar conductive material.

The planar conductive material can serve to improve conductivity by increasing surface contact between silicon particles in the negative electrode, and at the same time, to suppress the disconnection of the conductive path due to the volume expansion, and may be expressed as a plate-like conductive material or a bulk-type conductive material.

In an exemplary embodiment of the present application, the planar conductive material may include one or more selected from the group consisting of plate-like graphite, graphene, graphene oxide, and graphite flake, and preferably may be plate-like graphite.

In an exemplary embodiment of the present application, the average particle diameter (D50) of the planar conductive material may be 2 $\mu$m to 7 $\mu$m, specifically 3 $\mu$m to 6 $\mu$m, and more specifically 4 $\mu$m to 5 $\mu$m. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided the negative electrode composition in which the planar conductive material has D10 of 0.5 $\mu$m or greater and 1.5 $\mu$m or less, D50 of 2.5 $\mu$m or greater and 3.5 $\mu$m or less, and D90 of 7.0 $\mu$m or greater and 15.0 $\mu$m or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 5 $m^2$/g or greater.

In another exemplary embodiment, the planar conductive material may have a BET specific surface area of 5 $m^2$/g or greater and 500 $m^2$/g or less, preferably 5 $m^2$/g or greater and 300 $m^2$/g or less, and more preferably 5 $m^2$/g or greater and 250 $m^2$/g or less.

In another exemplary embodiment, the planar conductive material is a planar conductive material with a high specific surface area, and the BET specific surface area may satisfy a range of 50 $m^2$/g or greater and 500 $m^2$/g or less, preferably 80 $m^2$/g or greater and 300 $m^2$/g or less, and more preferably 100 $m^2$/g or greater and 300 $m^2$/g or less.

In another exemplary embodiment, the planar conductive material is a planar conductive material with a low specific surface area, and the BET specific surface area may satisfy a range of 5 $m^2$/g or greater and 40 $m^2$/g or less, preferably 5 $m^2$/g or greater and 30 $m^2$/g or less, and more preferably 5 $m^2$/g or greater and 25 $m^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, the first negative electrode conductive material may satisfy a range of 10 part by weight or more and 40 parts by weight or less, on the basis of 100 parts by weight of the first negative electrode active material layer composition.

In another exemplary embodiment, the first negative electrode conductive material may be included in an amount of 1 part by weight or more and 40 parts by weight or less, preferably 3 parts by weight or more and 30 parts by weight or less, and more preferably 5 parts by weight or more and 25 parts by weight or less on the basis of 100 parts by weight of the first negative electrode active material layer composition.

In an exemplary embodiment of the present application, the first negative electrode conductive material may include a point-like conductive material, a planar conductive material, and a linear conductive material, and a ratio of the point-like conductive material: the planar conductive material: the linear conductive material may satisfy 1:1:0.01 to 1:1:1.

In an exemplary embodiment of the present application, the point-like conductive material may satisfy a range of 1 part by weight or more and 60 parts by weight or less, preferably 5 parts by weight or more and 50 parts by weight or less, and more preferably 10 parts by weight or more and 50 parts by weight or less on the basis of 100 parts by weight of the first negative electrode conductive material.

In an exemplary embodiment of the present application, the planar conductive material may satisfy a range of 1 part by weight or more and 60 parts by weight or less, preferably 5 parts by weight or more and 50 parts by weight or less, and more preferably 10 parts by weight or more and 50 parts by weight or less on the basis of 100 parts by weight of the first negative electrode conductive material.

In an exemplary embodiment of the present application, the linear conductive material may satisfy a range of 0.01 part by weight or more and 10 parts by weight or less, preferably 0.05 part by weight or more and 8 parts by weight or less, and more preferably 0.1 part by weight or more and 5 parts by weight or less, on the basis of 100 parts by weight of the first negative electrode conductive material.

In an exemplary embodiment of the present application, the first negative electrode conductive material may include a linear conductive material, and a planar conductive material.

In an exemplary embodiment of the present application, the first negative electrode conductive material may include a linear conductive material and a planar conductive material, and a weight ratio of the linear conductive material to the planar conductive material may satisfy 0.01:1 to 0.1:1.

In an exemplary embodiment of the present application, as the first negative electrode conductive material satisfies the composition and ratio described above, the first negative electrode conductive material has a feature in which output characteristics at high C-rate are excellent because the life characteristics of the existing lithium secondary battery are not greatly affected and points where the battery can be charged and discharged are increased.

The first negative electrode conductive material according to the present application has a completely different configuration from a conductive material that is applied to the positive electrode. That is, the first negative electrode conductive material according to the present application serves to hold contacts between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the first negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the first negative electrode conductive material that is applied together with the silicon-based active material as in the present invention, in terms of configuration and role.

In an exemplary embodiment of the present application, the first negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The first negative electrode binder according to an exemplary embodiment of the present application serves to hold the first negative electrode active material and the first negative electrode conductive material in order to prevent distortion and structural deformation of the negative electrode structure in volume expansion and relaxation of the first negative electrode active material. When such roles are satisfied, all of the general binders can be applied. Specifically, an aqueous binder may be used, and more specifically, a PAM-based binder may be used.

In an exemplary embodiment of the present application, the first negative electrode binder may be included in an amount of 30 parts by weight or less, preferably 25 parts by weight or less, and more preferably 20 parts by weight or less, and 5 parts by weight or more and 10 parts by weight or more on the basis of 100 parts by weight of the first negative electrode active material layer composition.

Compared to existing carbon-based negative electrodes, when a Si-based negative electrode is used, an aqueous binder is applied in parts by weight described above, allowing the use of a point-like conductive material. In addition, the above characteristics allows the point-like conductive material to have hydrophobicity and excellent bond strength between the conductive material and the binder.

In an exemplary embodiment of the present application, wherein the second negative electrode active material may include a mixture of one or more selected from the group consisting of a carbon-based active material, a silicon-based active material, a metal-based active material capable of alloying with lithium, and a lithium-containing nitride.

In another exemplary embodiment, the second negative electrode active material may include a mixture of one or more and three or less selected from the group consisting of a carbon-based active material, a silicon-based active material, a metal-based active material capable of alloying with lithium, and a lithium-containing nitride.
In another exemplary embodiment, the second negative electrode active material may include a carbon-based active material and a silicon-based active material.

In another exemplary embodiment, the second negative electrode active material may include a silicon-based active material.

In an exemplary embodiment of the present application, there is provided the negative electrode for a lithium secondary battery in which the second negative electrode active material includes a mixture of one or more selected from the group consisting of a carbon-based active material, a silicon-based active material, a metal-based active material capable of alloying with lithium, and a lithium-containing nitride, and the silicon-based active material is included in an amount of 50 parts by weight or more and 100 parts by weight or less on the basis of 100 parts by weight of the second negative electrode active material.

In another exemplary embodiment, the second negative electrode active material may include a mixture of one or more selected from the group consisting of a carbon-based active material, a silicon-based active material, a metal-based active material capable of alloying with lithium, and a lithium-containing nitride, and the silicon-based active material may be included in an amount of 50 parts by weight or more and 100 parts by weight or less, preferably 70 parts by weight or more and 100 parts by weight or less, and more preferably 80 parts by weight or more and 100 parts by weight or less on the basis of 100 parts by weight of the second negative electrode active material.

In an exemplary embodiment of the present application, the silicon-based active material included in the second negative electrode active material may include one or more selected from the group consisting of $SiO_x$ (0<x<2), SiC, and a Si alloy.

In an exemplary embodiment of the present application, the silicon-based active material included in the second negative electrode active material may include one or more selected from the group consisting of $SiO_x$ (0<x<2), SiC, and a Si alloy, and may include $SiO_x$ (0<x<2) in an amount of 1 part by weight or more on the basis of 100 parts by weight of the second negative electrode active material.

In another exemplary embodiment, the silicon-based active material included in the second negative electrode active material may include one or more selected from the group consisting of SiOx (0<x<2), SiC, and a Si alloy, and may include SiOx (0<x<2) in an amount of 1 part by weight or more, or 10 parts by weight or more, and 99 parts by weight or less on the basis of 100 parts by weight of the second negative electrode active material.

In another exemplary embodiment, the silicon-based active material included in the second negative electrode active material may include SiOx (0<x<2).

In another exemplary embodiment, the silicon-based active material included in the second negative electrode active material may include SiC.

The negative electrode for a lithium secondary battery according to the present application includes the second negative electrode active material in the second negative electrode active material layer as described above. Accordingly, while maintaining the high capacity and high density characteristics by including the above-described first negative electrode active material, the second negative electrode active material serves as a buffer layer, making it possible to address the problem of degradation in surface during charging and discharging, the problem of uniformity during pre-lithiation, and the problem of life characteristics.

As an example, the second negative electrode active material layer of the present application may function as a buffer layer. An electrode containing a Si active material has excellent capacity characteristics compared to electrodes containing SiO or carbon-based active material. However, in the electrode containing a Si active material, deterioration is concentrated on the surface of the negative electrode active material layer due to rapid reaction with Li ions during charging and discharging.

This also occurs during the pre-lithiation process in which lithium ions are included in advance in the negative electrode active material layer. In the pre-lithiation process, a buffer layer is used to prevent direct contact between a Si-based electrode and lithium and to prevent deterioration in surface. Therefore, the second negative electrode active material layer of the present invention has the feature of being able to exhibit the same role and effect as the buffer layer in the pre-lithiation process.

In an exemplary embodiment of the present application, representative examples of the carbon-based active material include natural graphite, artificial graphite, expandable graphite, carbon fiber, non-graphitizable carbon, carbon black, carbon nanotubes, fullerene, activated carbon, or the like, and the carbon-based active material can be used without limitation as long as the carbon-based active material is typically used in a carbon material for a lithium secondary battery, and specifically may be processed into a spherical or point-like shape and used.

In an exemplary embodiment of the present application, the planar conductive material that is used as the first negative electrode conductive material described above has different structure and role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the planar conductive material that is used as the first negative electrode conductive material is a material having a plane or plate-like shape, and may be expressed as plate-like graphite. That is, the planar conductive material is a material that is included so as to maintain a conductive path in the negative electrode active material layer, and refers to a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present application, the use of a carbon-based active material as an active material means that the carbon-based active material is processed into a point-like or spherical shape and used as a material for storing or releasing lithium.

That is, in an exemplary embodiment of the present application, artificial graphite or natural graphite, which is a carbon-based active material, may have a BET specific surface area that satisfies a range of 0.1 $m^2/g$ or greater and 4.5 $m^2/g$ or less. In addition, plate-like graphite, which is a planar conductive material, has a planar shape, and a BET specific surface area thereof may be 5 $m^2/g$ or greater.

A representative example of the metal-based active material may be a metal substance containing any one or two or more metal elements selected from the group consisting of Al, Sn, Ag, Bi, Mg, Zn, In, Ge, Pb, Pd, Pt, Ti, Sb, Ga, Mn, Fe, Co, Ni, Cu, Sr, and Ba and the like. These metal substances may be used in any form such as an elementary substance, an alloy, an oxide ($TiO_2$, $SnO_2$ and the like), a nitride, a sulfide, a boride, and an alloy with lithium, but the elementary substance, the alloy, the oxide, and the alloy with lithium may be increased in capacity.

In an exemplary embodiment of the present application, there is provided the negative electrode for a lithium secondary battery in which the second negative electrode active material is included in an amount of 60 parts by weight or more on the basis of 100 parts by weight of the second negative electrode active material layer composition.

In another exemplary embodiment, the second negative electrode active material may be included in an amount of 60 parts by weight or more, and 100 parts by weight or less, or 99 parts by weight or less on the basis of 100 parts by weight of the second negative electrode active material layer composition.

The second negative electrode active material layer composition according to the present application has a feature of suppressing a surface reaction of the negative electrode to enhance life characteristics without deteriorating the capacity performance of the negative electrode by using the second negative electrode active material within the above range, which has lower capacity characteristics but has less particle cracking during charging and discharging than the first negative electrode active material.

In an exemplary embodiment of the present application, there is provided the negative electrode for a lithium secondary battery in which the second negative electrode active material layer composition further includes one or more selected from the group consisting of a second negative electrode conductive material and a second negative electrode binder.

In this case, the descriptions regarding the second negative electrode conductive material and the second negative electrode binder may be the same as the above descriptions regarding the first negative electrode conductive material and the first negative electrode binder.

In an exemplary embodiment of the present application, the second negative electrode active material layer has a first surface of the second negative electrode active material layer opposite to a surface facing the first negative electrode active material layer and a second surface of the second negative electrode active material layer facing the first negative electrode active material layer, and the first surface and the second surface include a non-uniform surface, respectively.

In this case, the fact that the first surface and the second surfaces include a non-uniform surface, respectively, means that a surface or interface is not formed ideally straight without irregularities, but includes some irregularities and curves.

That is, in general, when a composition is coated, a surface or interface thereof is not formed ideally straight but is formed to have a bumpy shape, which can be interpreted to mean that the first surface and the second surface include non-uniform surfaces.

FIG. 3 is a view showing a SEM photograph of a negative electrode for a lithium secondary battery according to an exemplary embodiment of the present application. Specifically, a surface marked with a red dotted line (triangle mark) corresponds to the second surface of the second negative electrode active material layer, and a surface marked with a yellow dotted line (circle mark) corresponds to the first surface. In this case, including a non-uniform surface may mean that the yellow and red dotted lines do not form straight lines but include curves.

In an exemplary embodiment of the present application, there is provided the negative electrode for a lithium secondary battery in which the second negative electrode active material layer satisfies a non-uniformity expressed by Formula 1 below.

$$[\text{Formula 1}]$$

$$0~\mu m \leq \left| C - (A+B/2) \right| \leq 10~\mu m$$

in the Formula 1,

A refers to a longest distance ($\mu$m) between the first surface and the second surface,
B refers to a shortest distance ($\mu$m) between the first surface and the second surface, and
C refers to an average thickness ($\mu$m) of the second negative electrode active material layer.

In an exemplary embodiment of the present application, A refers to the longest distance ($\mu$m) between the first surface and the second surface. Specifically, A may refer to the longest distance among all vertical distances in a thickness direction between the first surface and the second surface.

In an exemplary embodiment of the present application, B refers to the shortest distance ($\mu$m) between the first surface and the second surface. Specifically, B may refer to the shortest distance among all vertical distances in the thickness direction between the first surface and the second surface.

In addition, C is a value measured by averaging all vertical distances in the thickness direction between the first and second surfaces, and is defined as an average thickness of the second negative electrode active material layer.

In the present application, when the first negative electrode active material layer and the second negative electrode active material layer are ideally coated, both the first surface and the second surface are formed as uniform surfaces, and the values of A and B may be the same. That is, it may mean that the first surface and the second surface are formed uniformly in such a form that the shortest distance and the longest distance are the same. In this case, if both the first negative electrode active material layer and the second negative electrode active material layer are uniformly coated, the shortest distance, the longest distance, and the average thickness of the second negative electrode active material layer all have the same value, and Formula 1 above satisfies the value of 0.

In an exemplary embodiment of the present application, the fact that the second negative electrode active material layer satisfies the range of Formula 1 above may mean that the second negative electrode active material layer is more uniformly coated on top of the first negative electrode active material layer.

In an exemplary embodiment of the present application, Formula 1 above may satisfy $0\ \mu m \leq |C-(A+B/2)| \leq 10$ $\mu m$, preferably $0.5\ \mu m \leq |C-(A+B/2)| \leq 8\ \mu m$, and more preferably $0.5\ \mu m \leq |C-(A+B/2)| \leq 5\ \mu m$.

In an exemplary embodiment of the present application, there is provided the negative electrode for a lithium secondary battery in which A is 5 $\mu m$ or greater and 25 $\mu m$ or less and C is 5 $\mu m$ or greater and 20 $\mu m$ or less.

In an exemplary embodiment of the present application, A may satisfy a range of 5 $\mu m$ or greater and 25 $\mu m$ or less, preferably 5.5 $\mu m$ or greater and 20 $\mu m$ or less, and more preferably 6 $\mu m$ or greater and 19 $\mu m$ or less.

In an exemplary embodiment of the present application, B may satisfy a range of 3 $\mu m$ or greater and 10 $\mu m$ or less, preferably 4 $\mu m$ or greater and 9 $\mu m$ or less, and more preferably 7 $\mu m$ or greater and 9 $\mu m$ or less.

In an exemplary embodiment of the present application, C may satisfy a range of 5 $\mu m$ or greater and 20 $\mu m$ or less, preferably 5.5 $\mu m$ or greater and 18 $\mu m$ or less, and more preferably 6 $\mu m$ or greater and 15 $\mu m$ or less.

Particularly, in the negative electrode for a lithium secondary battery according to the present application, the second negative electrode active material layer satisfies the non-uniformity of Formula 1 above. In other words, the first negative electrode active material layer has a silicon-based negative electrode and is coated within a thin thickness range. In this case, there was a problem in forming the second negative electrode active material layer as a thin film on top of the silicon-based negative electrode. However, when performing coating by a method described below (by controlling a liquid thickness and a core thickness of a coater), the non-uniformity of Formula 1 above is satisfied, and the second negative electrode active material layer can be coated more uniformly and thinly on top of the first negative electrode active material layer. Accordingly, it is possible to secure rapid charging performance, and at the same time, to secure lifespan characteristics by effectively controlling a surface deterioration reaction.

In an exemplary embodiment of the present application, there is provided the negative electrode for a lithium secondary battery in which the average thickness of the second negative electrode active material layer is 10% or greater and 40% or less of a total thickness of the first negative electrode active material layer and the second negative electrode active material layer.

In another exemplary embodiment, the thickness of the first negative electrode active material layer may be 10 $\mu m$ or greater and 200 $\mu m$ or less, specifically 15 $\mu m$ or greater and 190 $\mu m$ or less, and more specifically 20 $\mu m$ or greater and 170 $\mu m$ or less.

In an exemplary embodiment of the present application, there is provided the negative electrode for a lithium secondary battery in which an average surface roughness (Sa) of the first surface is 700 nm or less.

In another exemplary embodiment, the average surface roughness (Sa) of the first surface may be 700 nm or less, preferably 680 nm or less, more preferably 660 nm or less, and 400 nm or greater, preferably 500 nm or greater, and more preferably 600 nm or greater.

In an exemplary embodiment of the present application, the average surface roughness may refer to a surface roughness. The average surface roughness indicates a degree of roughness of a surface and may indicate a degree of unevenness of a surface of a target material.

In an exemplary embodiment of the present application, there is provided the negative electrode for a lithium secondary battery in which a viscosity of the first negative electrode active material layer composition is a shear viscosity of 2,000 cPs or higher and 15,000 cPs or less at a shear rate of 2.5 (1/s), and a viscosity of the second negative electrode active material layer composition is lower than the viscosity of the first negative electrode active material layer composition.

In another exemplary embodiment, the viscosity of the first negative electrode active material layer composition may satisfy a shear viscosity of 2,000 cPs or higher and 15,000 cPs or less, preferably 2,300 cPs or higher and 14,000 cPs or less, and more preferably 2,500 cPs or higher and 12,000cPs or less at a shear rate of 2.5 (1/s).

In this case, the viscosity of the second negative electrode active material layer composition should be maintained lower than the viscosity of the first negative electrode active material layer composition so that a two-layered negative electrode active material layer can be formed as in the present application. More specifically, the viscosity of the second negative electrode active material layer composition should be lower than but similar to the viscosity of the first negative electrode active material layer composition.

In an exemplary embodiment of the present application, the negative electrode for a lithium secondary battery may be pre-lithiated.

The negative electrode for a lithium secondary battery according to the present application is composed of a double layer, and in particular, the second negative electrode active material layer that satisfies a specific non-uniformity serves as a buffer layer during pre-lithiation, allowing uniform lithiation to occur in an electrode depth direction during charging and discharging cycles.

An exemplary embodiment of the present application provides a method for manufacturing a negative electrode for a lithium secondary battery, the method including: preparing a negative electrode current collector layer; forming a first negative electrode active material layer by applying a first negative electrode active material layer composition to one surface or both surfaces of the negative electrode current collector layer through a coater; and forming a second negative electrode active material layer by applying a second negative electrode active material layer composition to a surface of the first negative electrode active material layer opposite to a surface in contact with the negative electrode current collector layer through the coater, wherein the first negative electrode active material includes one or more selected from the group consisting of $SiO_x$ (x=0) and $SiO_x$ (0<x<2), and includes $SiO_x$ (x=0) in an amount of 95 parts by weight or more on the basis of 100 parts by weight of the first negative electrode active material, wherein the second negative electrode active material includes a mixture of one or more selected from the group consisting of a carbon-based active material, a silicon-based active material, a metal-based active material capable of alloying with lithium, and a lithium-containing nitride, wherein in the step of forming the first negative electrode active material layer by applying the first negative electrode active material layer composition, a liquid thickness of a coater is 50 μm or greater and 100 μm or less, and wherein in the step of forming the second negative electrode active material layer by applying the second negative electrode active material layer composition to the surface of the first negative electrode active material layer opposite to the surface in contact with the negative electrode current collector layer, a liquid thickness of the coater is 10 μm or greater and 60 μm or less.

In the method for manufacturing a negative electrode, the above-described descriptions may be applied to the composition and content included in each step.

That is, each composition is applied through a coater in order to form the first negative electrode active material layer and the second negative electrode active material layer as described above. In this case, it was found that when the liquid thickness of the coater as described above is satisfied, the second negative electrode active material layer can be applied thinly and uniformly in the form of a thin film on the top of the first negative electrode active material layer. Accordingly, the negative electrode for a lithium secondary battery satisfying Formula 1 above can be manufactured.

In an exemplary embodiment of the present application, the liquid thickness of the coater may be the same meaning as a thickness of a coating liquid, and may mean a liquid thickness of the coated first negative electrode active material layer composition or second negative electrode active material layer composition itself.

In an exemplary embodiment of the present application, there is the method of manufacturing a negative electrode for a lithium secondary battery in which a core thickness of the coater is 0.4T or greater and 2T or less.

The present invention applies the second negative electrode active material layer, which can take the advantage of the Pure Si active material and cover the disadvantages, to the first negative electrode active material layer. In particular, the second negative electrode active material layer should be implemented as a thin film coating. However, it was a difficult task to coat the second negative electrode active material layer thinly and uniformly on top of the thin first negative electrode active material layer. However, it was found that when the liquid thickness and core thickness of the coater are adjusted to the above-described ranges, as described above, a negative electrode for a lithium secondary battery satisfying the uniformity and thickness according to the present application can be manufactured.

An exemplary embodiment of the present application includes forming a first negative electrode active material layer by applying a first negative electrode active material layer composition on one surface or both surfaces of the negative electrode current collector layer through a coater.

That is, this step is a step of forming an active material layer on the negative electrode current collector layer, and may mean a step of forming an active material layer on a surface (lower layer part), which is in contact with the negative electrode current collector layer, of a double layer structure.

In an exemplary embodiment of the present application, the applying of the first negative electrode active material layer composition includes applying and drying a first negative electrode slurry including a first negative electrode active material layer composition and a negative electrode slurry solvent.

In this case, a solid content of the first negative electrode slurry may satisfy a range of 10% to 40%.

In an exemplary embodiment of the present application, the forming of the first negative electrode active material layer may include mixing the first negative electrode slurry; and coating the mixed first negative electrode slurry on one surface or both surfaces of the negative electrode current collector layer through a coater, and the coating may be performed using a coating method that is commonly used in the art.

An exemplary embodiment of the present application includes forming a second negative electrode active material by applying a second negative electrode active material layer composition to a surface of the first negative electrode active material layer opposite to a surface in contact with the negative electrode current collector layer through a coater.

That is, this step is a step of forming a second negative electrode active material layer on the first negative electrode active material layer, and may mean a step of forming an active material layer on a surface (upper layer part), which is apart from the negative electrode current collector layer, of the double layer structure.

In an exemplary embodiment of the present application, the applying of the second negative electrode active material layer composition includes applying and drying a second negative electrode slurry including a second negative electrode active material layer composition and a negative electrode slurry solvent.

In this case, a solid content of the second negative electrode slurry may satisfy a range of 10% to 40%.

In an exemplary embodiment of the present application, there is provided the method for manufacturing a negative electrode for a lithium secondary battery in which the forming of the second negative electrode active material layer may include mixing the second negative electrode slurry, and coating the mixed second negative electrode slurry on a surface opposite to a surface of the first negative electrode active material layer in contact with the negative electrode current collector layer.

The coating may be performed using a coating method that is commonly used in the art.

The description of the forming of the first negative electrode active material layer may be applied to the forming of the second negative electrode active material layer in the same manner.

In an exemplary embodiment of the present application, there is provided the method for manufacturing a negative electrode for a lithium secondary battery in which the forming of the second negative electrode active material layer on the first negative electrode active material layer may include a wet on dry process, or a wet on wet process.

In an exemplary embodiment of the present application, the wet on dry process may refer to a process of applying the first negative electrode active material layer composition, drying the composition partially or completely, and applying the second negative electrode active material layer composition on top of the composition.

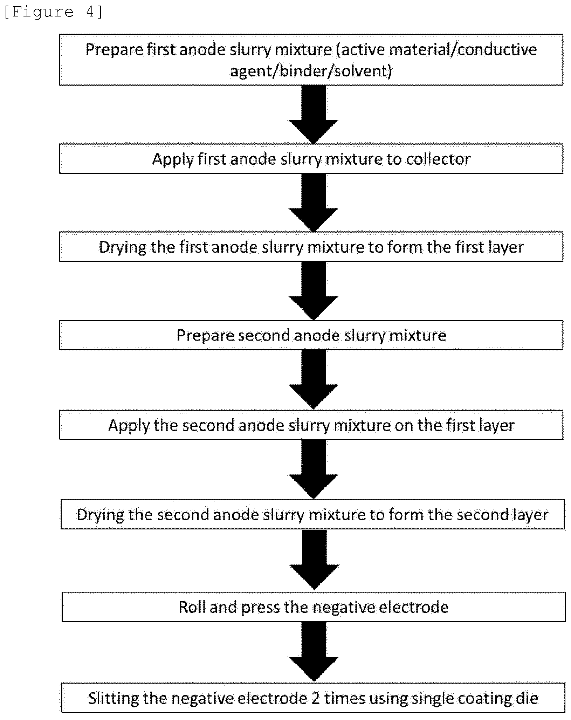

FIG. 4 is a flowchart showing a wet on dry process according to an exemplary embodiment of the present application. Specifically, in the wet on dry process, a first negative electrode slurry mixture (first negative electrode active material, first negative electrode conductive material, first negative electrode binder, first solvent) is prepared and applied to the negative electrode current collector layer. Thereafter, the first negative electrode slurry mixture is dried to form a first negative electrode active material layer. Thereafter, a second negative electrode slurry mixture is prepared, applied to the first negative electrode active material layer, and dried to form a second negative electrode active material layer. Thereafter, each layer may be rolled and pressed to form a negative electrode for a lithium secondary battery according to the present application.

In an exemplary embodiment of the present application, the wet on wet process refers to a process of applying the first negative electrode active material layer composition and applying the second negative electrode active material layer composition on top of the first negative electrode active material layer composition without drying the same.

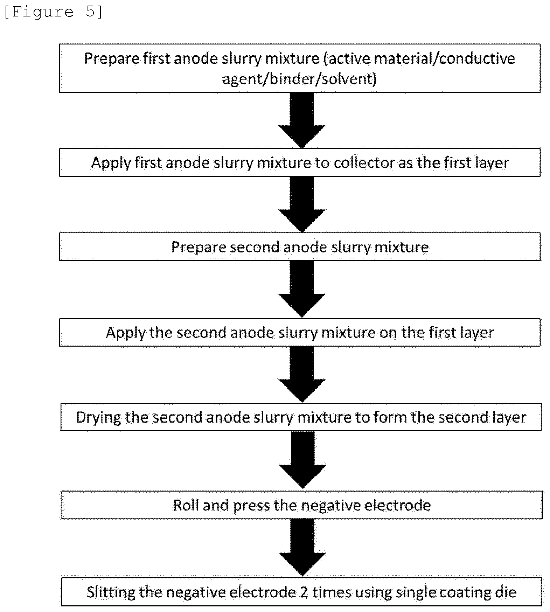

FIG. 5 is a flowchart showing a wet on wet process according to an exemplary embodiment of the present application. Specifically, in the wet on wet process, a first negative electrode slurry mixture is prepared and applied to a negative electrode current collector layer, and at the same time, a second negative electrode slurry mixture is prepared and applied to the first negative electrode slurry mixture, and then, the first and second negative electrode slurry mixtures are dried. Thereafter, each layer may be rolled and pressed to form a negative electrode for a lithium secondary battery according to the present application.

Thereafter, the negative electrode formed according to the wet on dry process or wet on wet process may be slit twice using a single coating die.

In particular, the wet on dry process is to apply the first negative electrode active material layer composition, to completely dry the composition, and then to apply the second negative electrode active material layer composition thereon, making it possible for the first negative electrode active material layer and the second negative electrode active material layer to have a clear boundary through the processes as described above. Accordingly, the compositions included in the first negative electrode active material layer and the second negative electrode active material layer are not mixed, making it possible to configure a double layer.

In an exemplary embodiment of the present application, the negative electrode slurry solvent may be used without limitation as long as it can dissolve the first negative electrode active material layer composition and the second negative electrode active material layer composition, and specifically, water or NMP may be used.

As a result of the wet on wet process described above, a bonding region in which the first negative electrode active material layer and the second negative electrode active material layer are mixed may be formed. In this case, in order for the wet on wet process to occur, the viscosity of the first negative electrode active material layer composition should be lower than the viscosity of the second negative electrode active material layer composition such that inter-mixing occurs in the bonding region and the process.

In the present application, after the first negative electrode active material layer is dried (wet on dry process), the second negative electrode active material layer is formed, so that an interface between the two layers is clearly divided. In addition, when the second negative electrode active material layer is applied in a state in which the first negative electrode active material layer composition is not completely dried (the first negative electrode active material layer composition and the second negative electrode active material layer composition are applied simultaneously), mixing occurs at an interface of the two layers, forming a bonding region.

In an exemplary embodiment of the present application, there is provided the method for manufacturing a negative electrode for a lithium secondary battery, the method including pre-lithiating a negative electrode in which the first negative electrode active material layer and the second negative electrode active material layer are formed on the negative electrode current collector layer, wherein the pre-lithiating of the negative electrode includes a lithium electroplating process, a lithium metal transfer process, a lithium metal deposition process, or a stabilized lithium metal powder (SLMP) coating process.

As described above, the second negative electrode active material layer contains the above-described second negative electrode active material and has a mixed composition of a silicon-based active material and a carbon-based active material, so that the advantage of rapid charging can be taken as it is. Especially, the second negative electrode active material has a mixed composition, and thus, is highly irreversible, which is advantageous even in the pre-lithiation process of precharging the negative electrode. As compared with a case in which only a first negative electrode active material layer is simply applied, the second negative electrode active material layer has the second negative electrode active material having the above composition, enabling a uniform pre-lithiation process on top of the negative electrode and thus improving the life.

In an exemplary embodiment of the present application, porosities of the first and second negative electrode active material layers may satisfy a range of 10% or greater and 60% or less.

In another exemplary embodiment, the porosities of the first and second negative electrode active material layers may satisfy a range of 10% or greater and 60% or less, preferably 20% or greater and 50% or less, and more preferably 30% or greater and 45% or less.

The porosity varies depending on the compositions and contents of the active materials, conductive materials and binders included in the first and second negative electrode active material layers, and accordingly, the electrode has the electrical conductivity and resistance within appropriate ranges.

An exemplary embodiment of the present application provides a lithium secondary battery including a positive electrode; the negative electrode for a lithium secondary battery according to the present application; a separator provided between the positive electrode and the negative electrode; and an electrolyte.

The secondary battery according to an exemplary embodiment of the present specification may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector layer and a positive electrode active material layer formed on the positive electrode current collector layer and including a positive electrode active material.

In the positive electrode, the positive electrode current collector layer is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector layer may typically have a thickness of 3 to 500 $\mu$m, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Mode for Invention

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Preparation Example>**

**<Preparation of Negative Electrode>**

**Example 1**

**Preparation of First Negative Electrode Active Material Layer**

Si (average particle diameter (D50): 5 $\mu$m) serving as a silicon-based active material, a first conductive material, a second conductive material, and polyacrylamide serving as a binder were added to distilled water serving as a solvent for formation of a negative electrode slurry at a weight ratio of 80:9.5:0.5:10 to prepare a first negative electrode slurry (solid concentration: 25 wt%).

The first conductive material was plate-like graphite (specific surface area: 17 m$^2$/g, average particle diameter (D50): 3.5 $\mu$m), and the second conductive material was SWCNT.

As a mixing method, after dispersing the first conductive material, the second conductive material, the binder and water at 2500 rpm for 30 minutes with a homo mixer, the active material was added to the dispersion, which was then dispersed at 2500 rpm for 30 minutes to fabricate a slurry.

The first negative electrode slurry was coated on both surfaces of a copper current collector (thickness: 8 $\mu$m) serving as a negative electrode current collector with a loading amount of 50 to 70 mg/25 cm$^2$, which was then roll-pressed and dried in a vacuum oven at 130°C for 10 hours to form a first negative electrode active material layer.

**Preparation of Second Negative Electrode Active Material Layer**

A second negative electrode active material layer composition was prepared using SiO (average particle diameter (D50): 3.5 $\mu$m) as a silicon-based active material, a first conductive material, a second conductive material, and polyacrylamide as a binder at a weight ratio of 70:19.8:0.2:10. A second negative electrode slurry was prepared by adding the composition to distilled water as a solvent for formation of a negative electrode slurry (solid concentration: 25 wt%).

The first conductive material was plate-like graphite (specific surface area: 17 m$^2$/g, average particle diameter (D50): 3.5 $\mu$m), and the second conductive material was carbon nanotubes.

As a mixing method, after dispersing the first conductive material, the second conductive material, the binder and water at 2500 rpm for 30 minutes with a homo mixer, the active material was added to the dispersion, which was then dispersed at 2500 rpm for 30 minutes to fabricate a slurry.

The second negative electrode slurry was coated on the first negative electrode active material layer with a loading amount of 15 to 40 mg/25cm$^2$, which was then roll-pressed and dried in a vacuum oven at 130°C for 10 hours to form a second negative electrode active material layer (thickness: 15 $\mu$m).

In this case, the core thickness and liquid thickness (coating liquid thickness) of the coater are as shown in Table 1 below, and the corresponding Formula 1 is also shown in Table 1 below.

[Table 1]

| | Liquid thickness of coater (coating liquid thickness, μm) | | Core thickness of coater (T) | | Formula 1 | | | |
|---|---|---|---|---|---|---|---|---|
| | first negative electrode active material layer | second negative electrode active material layer | first negative electrode active material layer | second negative electrode active material layer | A (μm) | B (μm) | C (μm) | Formula 1 (μm) |
| Example 1 | 75 | 35 | 1T | 1T | 18.6 | 7.4 | 13.6 | 0.6 |
| Example 2 | 72 | 36 | 1.5T | 1.5T | 16.5 | 8.2 | 14.5 | 2.15 |
| Example 3 | 79 | 26 | 0.8T | 1T | 19 | 7 | 13.8 | 0.8 |
| Example 4 | 62 | 37 | 0.5T | 1T | 15.9 | 7 | 14.2 | 2.75 |
| Comparative Example 1 | 52 | 42 | 1T | 1T | 26 | 4 | 26 | 11 |
| Comparative Example 2 | 86 | 54 | 2.1T | 2.1T | 29 | 6 | 28.3 | 14.15 |

**<Preparation of Secondary Battery>**

A positive electrode slurry (solid concentration: 78 wt%) was prepared by adding $LiNi_{0.6}Co_{0.2}Mn_{0.2}O_2$ (average particle diameter (D50): 15 μm) as a positive electrode active material, carbon black (product name: Super C65, manufacturer: Timcal) as a conductive material, and polyvinylidene fluoride (PVdF) as a binder to N-methyl-2-pyrrolidone (NMP) as a solvent for formation of a positive electrode slurry at a weight ratio of 97:1.5:1.5.

Aluminum current collector as the positive electrode current collector (thickness: The positive electrode slurry was coated on both surfaces of an aluminum current collector (thickness: 12 μm) serving as a positive electrode current collector with a loading amount of 537 mg/25 cm², which was then roll-pressed and dried in a vacuum oven at 130°C for 10 hours to form a positive electrode active material layer (thickness: 65 μm), whereby a positive electrode was prepared (thickness of positive electrode: 77 μm, porosity: 26%).

A lithium secondary battery was manufactured by interposing a polyethylene separator between the positive electrode and the negative electrode of the Examples and the Comparative Examples and injecting an electrolyte.

The electrolyte was obtained by adding vinylene carbonate to an organic solvent, in which fluoroethylene carbonate (FEC) and diethyl carbonate (DMC) were mixed at a volume ratio of 30:70, in an amount of 3 wt% on the basis of a total weight of the electrolyte and adding $LiPF_6$ as a lithium salt to a concentration of 1M.

**Experimental Example 1: Evaluation of Life**

**Characteristics**

For the secondary batteries including the negative electrodes manufactured in the Examples and Comparative Examples, the life and capacity retention rate were evaluated using an electrochemical charging and discharging device. The in-situ cycle test was conducted on the secondary battery at 4.2-3.0 V 1 C/0.5 C, and during the test, 0.33 C/0.33 C charging/discharging (4.2-3.0 V) was performed every 50 cycles to measure the capacity retention rate. In Table 2 below, the in-situ capacity retention rate, not the RPT capacity retention rate, is indicated.

capacity retention rate (%)={ (discharge capacity in the Nth cycle)/(discharge capacity in the first cycle) }$\times$100

**Experimental Example 2: Evaluation of Resistance Increase Rate Measurement**

In the test in Experimental Example 1, the capacity retention rate was measured by charging/discharging (4.2-3.0V) the battery at 0.33C/0.33C every 50 cycles, and then the resistance increase rate was compared and analyzed by discharging the battery with a pulse of 2.5C at SOC50 to measure the resistance.

In addition, for the life characteristic evaluation and the resistance increase rate measurement evaluation, data was calculated at 200 cycles, respectively, and the results are shown in Table 2 below.

[Table 2]

|  | Capacity retention rate evaluation (%, @200 cycles) | Resistance increase rate (%, @200 cycles) |
|---|---|---|
| Example 1 | 90.76 | 1.43 |
| Example 2 | 89.1 | 2.21 |
| Example 3 | 90.6 | 1.7 |
| Example 4 | 88.5 | 2.52 |
| Comparative Example 1 | 87 | 3.7 |
| Comparative Example 2 | 86.5 | 4.1 |

As can be seen in Tables 1 and 2, in the case of the negative electrodes according to the Examples of the present application, the second negative electrode active material layer satisfies the non-uniformity of Formula 1 above. In other words, the first negative electrode active material layer has a silicon-based negative electrode and is coated within a thin thickness range. In this case, there was a problem in forming the second negative electrode active material layer as a thin film on top of the silicon-based negative electrode. However, when performing coating by the method as in Table 1 (by controlling a liquid thickness and a core thickness of the coater), the non-uniformity of Formula 1 above is satisfied, and the second negative electrode active material layer can be coated more uniformly and thinly on top of the first negative electrode active material layer.

Accordingly, it could be confirmed that the lithium secondary battery including the negative electrode had optimal capacity characteristics, which are the advantage of a Si negative electrode, and at the same time improved cycle characteristics and resistance increase rate.

In the case of Comparative Example 1 and Comparative Example 2, each exceeds the range of Formula 1 of the present application. That is, the structure in which the second negative electrode active material layer is formed is the same, but the coating is not uniform compared to Examples 1 to 4. In this case, it could be confirmed that the capacity and life could be improved compared to the general negative electrode having a single-layer structure, but the capacity retention rate and the resistance increase rate were not good compared to Examples 1 to 4 of the present application. This corresponds to the result of the second negative electrode active material layer, which serves as a buffer layer, being coated non-uniformly on top of the first negative electrode active material layer.

**Claims**

1. A negative electrode for a lithium secondary battery, the negative electrode comprising:

   a negative electrode current collector layer;
   a first negative electrode active material layer provided on one surface or both surfaces of the negative electrode current collector layer; and
   a second negative electrode active material layer provided on a surface of the first negative electrode active material layer opposite to a surface facing the negative electrode current collector layer,
   wherein the first negative electrode active material layer comprises a first negative electrode active material layer composition comprising a first negative electrode active material, and the second negative electrode active material layer comprises a second negative electrode active material layer composition comprising a second negative electrode active material,
   wherein the first negative electrode active material comprises one or more selected from the group consisting of $SiO_x$ (x=0) and $SiO_x$ (0<x<2), and comprises the $SiO_x$ (x=0) in an amount of 95 parts by weight or more on the basis of 100 parts by weight of the first negative electrode active material,
   wherein the second negative electrode active material comprises a mixture of one or more selected from the group consisting of a carbon-based active material, a silicon-based active material, a metal-based active material capable of alloying with lithium, and a lithium-containing nitride,
   wherein the second negative electrode active material layer has a first surface of the second negative electrode active material layer opposite to a surface facing the first negative electrode active material layer and a second surface of the second negative electrode active material layer facing the first negative electrode active material layer,
   wherein the first surface and the second surface comprise a non-uniform surface, respectively, and
   wherein the second negative electrode active material layer satisfies a non-uniformity expressed by Formula 1 below:

   [Formula 1]

   $$0 \ \mu m \ \leq \ \left| C-(A+B/2) \right| \ \leq \ 10 \ \mu m$$

   in the Formula 1,

   A refers to a longest distance ($\mu$m) between the first surface and the second surface,
   B refers to a shortest distance ($\mu$m) between the first surface and the second surface, and
   C refers to an average thickness ($\mu$m) of the second negative electrode active material layer.

2. The negative electrode for a lithium secondary battery of claim 1, wherein the A is 5 $\mu$m or greater and 25 $\mu$m or less, and
   wherein the C is 5 $\mu$m or greater and 20 $\mu$m or less.

3. The negative electrode for a lithium secondary battery of claim 1, wherein the average thickness of the second negative electrode active material layer is 10% or greater and 40% or less of a total thickness of the first negative electrode active material layer and the second negative electrode active material layer.

4. The negative electrode for a lithium secondary battery of claim 1, wherein an average surface roughness (Sa) of the first surface is 700 nm or less.

5. The negative electrode for a lithium secondary battery of claim 1, wherein the second negative electrode active material comprises a mixture of one or more selected from the group consisting of a carbon-based active material, a silicon-based active material, a metal-based active material capable of alloying with lithium, and a lithium-containing nitride, and the silicon-based active material is included in an amount of 50 parts by weight or more and 100 parts by weight or less on the basis of 100 parts by weight of the second negative electrode active material.

6. The negative electrode for a lithium secondary battery of claim 1, wherein the silicon-based active material comprises one or more selected from the group consisting of $SiO_x$ (0<x<2), SiC, and a Si alloy.

7. The negative electrode for a lithium secondary battery of claim 1, wherein the silicon-based active material comprises $SiO_x$ (0<x<2).

8. The negative electrode for a lithium secondary battery of claim 1, wherein the first negative electrode active material is included in an amount of 60 parts by weight or more on the basis of 100 parts by weight of the first negative electrode active material layer composition.

9. The negative electrode for a lithium secondary battery of claim 1, wherein a viscosity of the first negative electrode active material layer composition is a shear viscosity of 2,000 cPs or higher and 15,000 cPs or less at a shear rate of 2.5 (1/s), and
wherein a viscosity of the second negative electrode active material layer composition is lower than the viscosity of the first negative electrode active material layer composition.

10. The negative electrode for a lithium secondary battery of claim 1, wherein the first negative electrode active material layer is formed on an entire surface of the negative electrode current collector layer, and
wherein the second negative electrode active material layer is formed on an entire surface of the first negative electrode active material layer.

11. A method for manufacturing a negative electrode for a lithium secondary battery, the method comprising:

   preparing a negative electrode current collector layer;
   forming a first negative electrode active material layer by applying a first negative electrode active material layer composition to one surface or both surfaces of the negative electrode current collector layer through a coater; and
   forming a second negative electrode active material layer by applying a second negative electrode active material layer composition to a surface of the first negative electrode active material layer opposite to a surface in contact with the negative electrode current collector layer through the coater,
   wherein the first negative electrode active material includes one or more selected from the group consisting of $SiO_x$ (x=0) and $SiO_x$ (0<x<2), and includes $SiO_x$ (x=0) in an amount of 95 parts by weight or more on the basis of 100 parts by weight of the first negative electrode active material,
   wherein the second negative electrode active material includes a mixture of one or more selected from the group consisting of a carbon-based active material, a silicon-based active material, a metal-based active material capable of alloying with lithium, and a lithium-containing nitride,
   wherein in the forming of the first negative electrode active material layer by applying the first negative electrode active material layer composition, a liquid thickness of a coater is 50 $\mu$m or greater and 100 $\mu$m or less, and
   wherein in the forming of the second negative electrode active material layer by applying the second negative electrode active material layer composition to the surface of the first negative electrode active material layer opposite to the surface in contact with the negative electrode current collector layer, a liquid thickness of the coater is 10 $\mu$m or greater and 60 $\mu$m or less.

12. The method of claim 11, wherein a core thickness of the coater is 0.4T or greater and 2T or less.

13. The method of claim 11, comprising pre-lithiating a negative electrode having the first negative electrode active material layer and second negative electrode active material layer formed on the negative electrode current collector, wherein the pre-lithiating of the negative electrode comprises a lithium electroplating process, a lithium metal transfer process, a lithium metal deposition process, or a stabilized lithium metal powder (SLMP) coating process.

14. The method of claim 11, wherein the forming the second negative electrode active material layer on the first negative electrode active material layer comprises a wet on dry process, and
wherein the wet on dry process comprises:

   applying the first negative electrode active material layer composition;
   forming the first negative electrode active material layer by drying partially or completely the applied first negative electrode active material layer composition; and
   applying the second negative electrode active material layer composition to the first negative electrode active material layer.

15. The method of claim 11, wherein the forming the second negative electrode active material layer on the first negative electrode active material layer comprises a wet on wet process, and

wherein the wet on wet process comprises:

applying the first negative electrode active material layer composition; and
applying the second negative electrode active material layer composition to the first negative electrode active material layer composition in an undried state of the first negative electrode active material layer composition.

16. A lithium secondary battery comprising:

a positive electrode;
the negative electrode for a lithium secondary battery of any one of claims 1 to 10;
a separator provided between the positive electrode and the negative electrode; and
an electrolyte.

[Figure 1]

[Figure 2]

[Figure 3]

[Figure 4]

```
┌────────────────────────────────────────────────────────┐
│  Prepare first anode slurry mixture (active material/    │
│              conductive agent/binder/solvent)            │
└────────────────────────────────────────────────────────┘
                            ↓
┌────────────────────────────────────────────────────────┐
│          Apply first anode slurry mixture to collector    │
└────────────────────────────────────────────────────────┘
                            ↓
┌────────────────────────────────────────────────────────┐
│   Drying the first anode slurry mixture to form the first layer │
└────────────────────────────────────────────────────────┘
                            ↓
┌────────────────────────────────────────────────────────┐
│            Prepare second anode slurry mixture            │
└────────────────────────────────────────────────────────┘
                            ↓
┌────────────────────────────────────────────────────────┐
│     Apply the second anode slurry mixture on the first layer │
└────────────────────────────────────────────────────────┘
                            ↓
┌────────────────────────────────────────────────────────┐
│  Drying the second anode slurry mixture to form the second layer │
└────────────────────────────────────────────────────────┘
                            ↓
┌────────────────────────────────────────────────────────┐
│             Roll and press the negative electrode         │
└────────────────────────────────────────────────────────┘
                            ↓
┌────────────────────────────────────────────────────────┐
│  Slitting the negative electrode 2 times using single coating die │
└────────────────────────────────────────────────────────┘
```

[Figure 5]

```
┌─────────────────────────────────────────────────────┐
│   Prepare first anode slurry mixture (active         │
│   material/conductive agent/binder/solvent)          │
└─────────────────────────────────────────────────────┘
                         ↓
┌─────────────────────────────────────────────────────┐
│  Apply first anode slurry mixture to collector as    │
│  the first layer                                     │
└─────────────────────────────────────────────────────┘
                         ↓
┌─────────────────────────────────────────────────────┐
│        Prepare second anode slurry mixture           │
└─────────────────────────────────────────────────────┘
                         ↓
┌─────────────────────────────────────────────────────┐
│    Apply the second anode slurry mixture on the      │
│    first layer                                       │
└─────────────────────────────────────────────────────┘
                         ↓
┌─────────────────────────────────────────────────────┐
│ Drying the second anode slurry mixture to form the   │
│ second layer                                         │
└─────────────────────────────────────────────────────┘
                         ↓
┌─────────────────────────────────────────────────────┐
│        Roll and press the negative electrode         │
└─────────────────────────────────────────────────────┘
                         ↓
┌─────────────────────────────────────────────────────┐
│ Slitting the negative electrode 2 times using        │
│ single coating die                                   │
└─────────────────────────────────────────────────────┘
```

## INTERNATIONAL SEARCH REPORT

| International application No. |
| --- |
| **PCT/KR2023/020506** |

**A.  CLASSIFICATION OF SUBJECT MATTER**

**H01M 4/134**(2010.01)i; **H01M 4/38**(2006.01)i; **H01M 4/48**(2010.01)i; **H01M 10/0525**(2010.01)i; **H01M 4/04**(2006.01)i; **H01M 4/02**(2006.01)i

According to International Patent Classification (IPC) or to both national classification and IPC

**B.  FIELDS SEARCHED**

Minimum documentation searched (classification system followed by classification symbols)

H01M 4/134(2010.01); B29C 47/12(2006.01); B29C 47/14(2006.01); H01M 10/052(2010.01); H01M 10/0525(2010.01); H01M 4/13(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 음극(anode), 집전체(current collector), 음극 활물질층(anode active material layer), 규소(silicon), 코터(coater), 두께(thickness)

**C.  DOCUMENTS CONSIDERED TO BE RELEVANT**

| Category* | Citation of document, with indication, where appropriate, of the relevant passages | Relevant to claim No. |
| --- | --- | --- |
| X | KR 10-2019-0042299 A (LG CHEM, LTD.) 24 April 2019 (2019-04-24)<br>    See claims 1 and 5-8; and paragraphs [0031], [0066]-[0068] and [0074]. | 11,13-14 |
| Y | | 15 |
| A | | 1-10,12,16 |
| Y | KR 10-2022-0094183 A (LG ENERGY SOLUTION, LTD.) 05 July 2022 (2022-07-05)<br>    See claims 1 and 10; and paragraph [0058]. | 15 |
| A | KR 10-2019-0042335 A (LG CHEM, LTD.) 24 April 2019 (2019-04-24)<br>    See entire document. | 1-16 |
| A | KR 10-2022-0000811 A (SAMSUNG SDI CO., LTD.) 04 January 2022 (2022-01-04)<br>    See entire document. | 1-16 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **01 April 2024** | **01 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/020506** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-0921583 B1 (3M INNOVATIVE PROPERTIES COMPANY) 14 October 2009 (2009-10-14)<br>See entire document. | 1-16 |

Form PCT/ISA/210 (second sheet) (July 2022)

INTERNATIONAL SEARCH REPORT
Information on patent family members

International application No.

**PCT/KR2023/020506**

| Patent document cited in search report | | | Publication date (day/month/year) | Patent family member(s) | | | Publication date (day/month/year) |
|---|---|---|---|---|---|---|---|
| KR | 10-2019-0042299 | A | 24 April 2019 | CN | 111052456 | A | 21 April 2020 |
| | | | | CN | 111052456 | B | 03 January 2023 |
| | | | | EP | 3660956 | A1 | 03 June 2020 |
| | | | | KR | 10-2254263 | B1 | 21 May 2021 |
| | | | | US | 11837718 | B2 | 05 December 2023 |
| | | | | US | 2021-0083273 | A1 | 18 March 2021 |
| | | | | WO | 2019-078544 | A1 | 25 April 2019 |
| KR | 10-2022-0094183 | A | 05 July 2022 | WO | 2022-145993 | A1 | 07 July 2022 |
| KR | 10-2019-0042335 | A | 24 April 2019 | KR | 10-2335314 | B1 | 06 December 2021 |
| KR | 10-2022-0000811 | A | 04 January 2022 | CN | 113851611 | A | 28 December 2021 |
| | | | | EP | 3930046 | A1 | 29 December 2021 |
| | | | | JP | 2022-008268 | A | 13 January 2022 |
| | | | | US | 2021-0408551 | A1 | 30 December 2021 |
| KR | 10-0921583 | B1 | 14 October 2009 | AU | 2002-342259 | A1 | 09 July 2003 |
| | | | | EP | 1458545 | A1 | 22 September 2004 |
| | | | | EP | 1458545 | B1 | 09 January 2008 |
| | | | | JP | 2005-512853 | A | 12 May 2005 |
| | | | | KR | 10-2004-0068949 | A | 02 August 2004 |
| | | | | US | 2003-0116881 | A1 | 26 June 2003 |
| | | | | US | 2005-0008782 | A1 | 13 January 2005 |
| | | | | US | 6813820 | B2 | 09 November 2004 |
| | | | | US | 7615175 | B2 | 10 November 2009 |
| | | | | WO | 03-053655 | A1 | 03 July 2003 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220184859
- JP 2009080971 A